(19) Europäisches Patentamt
European Patent Office
Office européen des brevets

(11) **EP 0 922 938 A1**

(12) **EUROPÄISCHE PATENTANMELDUNG**

(43) Veröffentlichungstag:
**16.06.1999 Patentblatt 1999/24**

(51) Int. Cl.⁶: **G01F 1/66**, G01P 13/00

(21) Anmeldenummer: 98123559.1

(22) Anmeldetag: **10.12.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **10.12.1997 DE 19754841**

(71) Anmelder:
**Unitechnik Cieplik & Poppek GmbH
51674 Wiehl (DE)**

(72) Erfinder:
**Bongards, Michael Prof. Dr.
58566 Kierspe (DE)**

(74) Vertreter:
**Selting, Günther, Dipl.-Ing. et al
Patentanwälte
von Kreisler, Selting, Werner
Postfach 10 22 41
50462 Köln (DE)**

(54) **Auslass-Messeinrichtung**

(57)     Eine Auslaß-Meßeinrichtung für aus einem Silo (10) austretendes schütt- oder fließfähiges Gut (14) hat einen Mikrowellensensor (16), der elektromagnetische Signale auf das aus dem Silo (10) austretende Gut (14) sendet und das von dem Gut (14) reflektierte Signal empfängt. Der Mikrowellensensor (16) arbeitet nach dem Dopplerprinzip, d.h. daß er derart ausgerichtet ist, daß sich in seinem Erfassungsbereich (17) der Abstand des fallenden Gutes (14) verändert, wodurch die Frequenz des reflektierten Signals unterschiedlich zu derjenigen des ausgesandten Signals ist. Der Mikrowellensensor (16) gibt anhand des Frequenzunterschiedes ein den Gutaustritt angebendes Erkennungssignal aus.

FIG.7

FIG.3

**Beschreibung**

Die Erfindung betrifft eine Auslaß-Meßeinrichtung für aus einem Silo ausströmendes schütt- oder fließfähiges Gut, insbesondere für Beton.

Beim Austrag von Gütern aus einem Silo ist eine ständige Überwachung der Auslaßöffnungen des Silos, ob das Gut tatsächlich aus dem Silo austritt oder ob es z.B. wegen Brückenbildung oberhalb der Öffnung oder wegen Verfestigung nicht austritt gewünscht. Zur Überwachung werden beispielsweise Lichtschranken verwendet, die das fallende Gut erfassen. Ist jedoch das Gut ein im Fluß schwer zu kontrollierendes und zudem die Meßeinrichtung schnell verschmutzendes Gut wie z.B. Beton, setzen sich herkömmliche Meßeinrichtungen sehr schnell durch Spritzer zu, so daß keine zuverlässige Messung möglich ist.

Eine typische Anwendung ist z.B. die Herstellung von Betonfertigteilen. Bei der Erstellung von Gebäuden werden vermehrt Betonfertigteile, wie Wandelemente, Deckenelemente oder auch komplette Sanitärzellen eingesetzt. Die am häufigsten verwendeten Betonfertigteile sind Platten, die flach liegend in frei positionierbaren und wiederverwendbaren Formen produziert werden. Diese Platten müssen mit einer genau einzuhaltenden Dicke gefertigt werden, um des Transportgewicht zu minimieren und die vorgegebenen baustatischen Bedingungen einzuhalten. Zur Herstellung der Platten wird üblicherweise ein mit mehreren Tonnen Beton gefüllter Betonverteiler über die feststehenden Formen gefahren. An einem trichterförmigen Auslaßbereich an der Unterseite des Betonverteilers befinden sich mehrere Auslaßöffnungen bzw. Dosiervorrichtungen, um bei einer geradlinigen Fahrt über die Formen den Austrag des Betons an die individuellen Abmessungen der Formen anzupassen. Je nach der Form der zu gießenden Platten müssen die einzelnen Auslaßöffnungen zu unterschiedlichen Zeitpunkten geöffnet und geschlossen werden, so daß möglichst wenig, bzw. am besten kein Beton auf die Trennwände der Formen oder auf nicht zu betonierende Bereiche gelangt. Zum Verschließen der Auslaßöffnungen werden häufig einfache Schieber verwendet. Eine Austragsregelung über Schneckendosierer ist ebenfalls möglich.

In der DE 30 41 905 A1, DE 30 50 756 C2, DE 32 08 290 A1 sind jeweils Betonausbreit- bzw. Betondosiervorrichtungen mit einer Zellradschleuse mit Verteiler beschrieben. Diese Ausführungen haben den Nachteil, daß die Dosiereinrichtung stark verschleißt und daher häufig ausgewechselt werden muß. In der DE 31 48 699 A1 ist eine Rüttelvorrichtung zum Anbau an einem Betonverteiler beschrieben. Durch das Rütteln sollen punktuelle Verfestigungen des Betons aufgebrochen oder oberhalb der Auslaßöffnung gebildete Brücken zerstört werden. Nachteilig ist jedoch, daß das Rütteln auch zum Verfestigen des Betons in dem Verteiler führen kann.

Es ist Aufgabe der Erfindung eine Auslaß-Meßeinrichtung für aus einem Silo ausströmendes schütt- oder fließfähiges Gut zu schaffen, die zuverlässig und dauerhaft, d.h. ohne zu verschleißen erkennt, ob das Gut aus dem Silo austritt oder nicht.

Diese Aufgabe wird erfindungsgemäß mit den Merkmalen des Patentanspruchs 1 gelöst.

Die erfindungsgemäße Auslaß-Meßeinrichtung hat einen Mikrowellensensor, der elektromagnetische Signale auf das aus dem Silo austretende Gut sendet und von dem Gut reflektierte Signale empfängt, wobei der Mikrowellensensor derart ausgerichtet ist, daß die Messung nach dem Dopplereffekt erfolgt. Das heißt, daß sich in dem Erfassungsbereich des Mikrowellensensors der Abstand des fallenden Gutes zu dem Mikrowellensensor verändert, wodurch die Frequenz des von dem Gut reflektierten Signals unterschiedlich ist zu derjenigen des von dem Mikrowellensensor ausgesandten Signals. Aufgrund der Feststellung eines Frequenzunterschiedes erzeugt der Mikrowellensensor ein Erkennungssignal, das den Austritt des Gutes angibt. Das von dem Mikrowellensensor ausgesandte Signal ist auf das unterhalb des Silos im freien Fall befindliche Gut ausgerichtet; dies führt in Verbindung mit der Verwendung des Mikrowellensensors zu einer berührungslosen Erfassung des Gutes. Da die Auslaß-Meßeinrichtung mit dem Dopplereffekt arbeitet, werden ausschließlich sich relativ zu dem Sensor bewegende Teile des Gutes erfaßt. An der Vorrichtung anhaftendes Gut, das sich nicht bewegt, führt daher nicht zu Fehlmessungen.

In einer bevorzugten Ausführungsform der Auslaß-Meßeinrichtung ist der Mikrowellensensor geneigt ausgerichtet, und zwar derart, daß sein Erfassungsbereich in Richtung der Auslaßöffnung des Silos gerichtet ist. Bei dieser Anordnung ist die Meßempfindlichkeit des Sensors gegenüber einer Ausrichtung senkrecht zu der Fallrichtung des Gutes vergrößert, da die Entfernungsänderung des Gutes zum Sensor größer ist.

Im folgenden wird ein Ausführungsbeispiel der Erfindung anhand der Zeichnungen näher erläutert.

Es zeigen:

Fig. 1      die Draufsicht auf ein Formelement zum Herstellen von Betonfertigteilen,

Fig. 2      die Vorderansicht eines Betonverteilers,

Fig. 3      eine Seitenansicht des Betonverteilers in Schnittdarstellung,

Fig. 4      die Unteransicht des Betonverteilers,

Fig. 5      eine schematische Darstellung des Sensors,

Fig. 6      eine prinzipielle Darstellung des Meßprinzips, und

Fig. 7     den Sensor in verschiedenen Ausrichtungen.

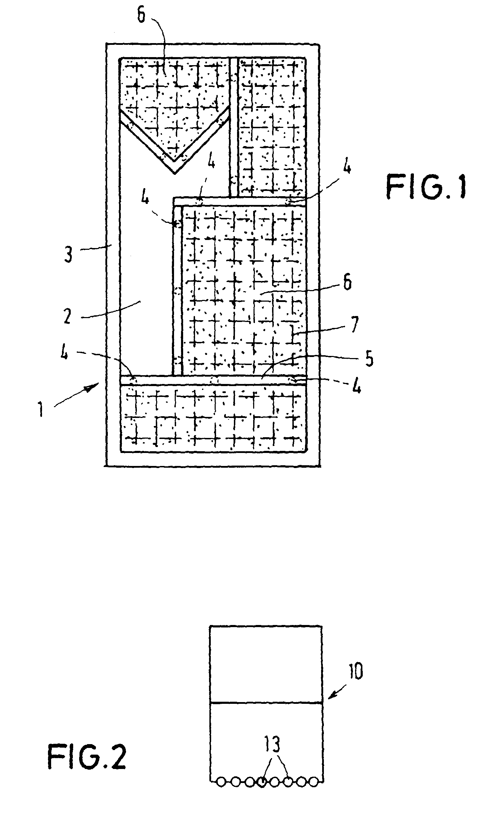

In Fig. 1 ist eine Form 1 zur Herstellung von Betonfertigteilen in Draufsicht gezeigt. Die Form 1 besteht aus einer großen ebenen Eisenplatte 2, die typischerweise Abmessungen von 3 x 10 m hat und mit einem festen Schalungsrand 3 umgeben ist. Zum Herstellen von Betonfertigteilen beliebiger Form kann die Form 1 unterteilt werden. Dazu werden magnetische Wandabsteller 4 auf die Eisenplatte 2 aufgesetzt und anschließend werden auf die Wandabsteller 4 U-förmige Profile 5 aufgelegt, so daß individuell geformte Einzelbereiche 6 für die Betonfertigteile entstehen. In diese Bereiche 6 werden Bewehrungseisen 7 gelegt und bei Bedarf Platzhalter, beispielsweise aus Styropor, für Steckdosen oder Türen in dem Bereich 6 positioniert.

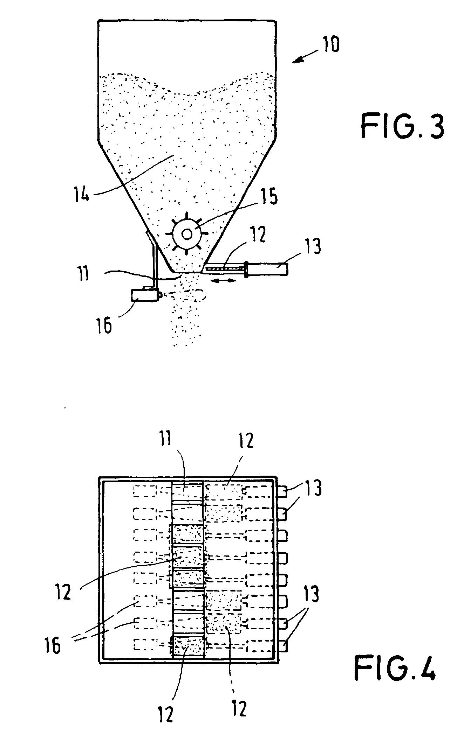

Nachdem diese Vorbereitungen abgeschlossen sind, wird ein Betonverteiler 10, wie in den Fign. 2 bis 4 dargestellt ist, in Längsrichtung über die Eisenplatte 2 verfahren. Der Betonverteiler 10 ist ein Kübel, der mehrere Tonnen Beton faßt und an seiner Unterseite trichterförmig ausgebildet ist. Am unteren Ende des Trichters befinden sich mehrere in einer Reihe angeordnete schlitzförmige Auslaßöffnungen 11, die jeweils einzeln mit einem Schieber 12 verschließbar sind. Die Schieber 12 verlaufen in einer Führung und sind jeweils mit einem Zylinder 13 betätigbar. In dem Betonverteiler 10 befindet sich oberhalb der Auslaßöffnungen 11 eine Rührwalze 15 zur Durchmischung des Betons 14 und zur Verhinderung von Verfestigungen.

Die Breite des Betonverteilers 10 entspricht häufig der halben Seitenlänge der Schmalseite der Eisenplatte 2. Zum Betonieren der Betonfertigteile wird der Betonverteiler 10 über die Länge der einen Hälfte der Eisenplatte 2 verfahren, am Ende der Eisenplatte 2 umgesetzt und dann über die verbleibende freie Hälfte in entgegengesetzter Richtung zurückverfahren. Um den verfügbaren Platz der Eisenplatte 2 optimal auszunutzen, sind Betonfertigteile verschiedener Formen platzsparend miteinander kombiniert. Dies hat zur Folge, daß die die Auslaßöffnungen 11 verschließenden Schieber 12 zu unterschiedlichen Zeitpunkten geöffnet und geschlossen werden müssen, je nach dem ob sich unter der jeweiligen Auslaßöffnung 11 ein zu betonierender Bereich 6 oder ein nicht zu betonierender Bereich wie beispielsweise ein U-förmiges Profil 5 oder ein Freiraum der Eisenplatte 2 befindet.

Trotz der Rührwalze 15 kann es zu Brückenbildungen oder Verhärtungen oberhalb der Auslaßöffnungen 11 kommen. In diesem Fall würde auch bei geöffneten Schieber 12 kein Beton aus der Auslaßöffnung 11 austreten, so daß in dem entsprechenden Abschnitt des Betonfertigteils nicht genügend Beton 14 vorhanden wäre. Dann müßte diese Stelle z.B. manuell nachbearbeitet werden, was teuer und langwierig ist und die Produktqualität, z.B. die Schichtdicke, verschlechtern kann.

Zur Erfassung, ob Beton 14 aus dem Betonverteiler 10 austritt oder nicht, ist für jede Auslaßöffnung 11 ein Mikrowellensensor 16 vorgesehen. Die Mikrowellensensoren 16 sind hinter einer massiven Schutzwand aus nicht leitendem Material, wie beispielsweise Hartplastik angeordnet, so daß die Mikrowellensensoren nicht durch Betonspritzer oder Reinigungswasser beschädigt werden können. Nachteile im Betrieb des Sensors treten dabei nicht auf, da Mikrowellen elektrisch nicht leitende Stoffe verlustfrei durchdringen.

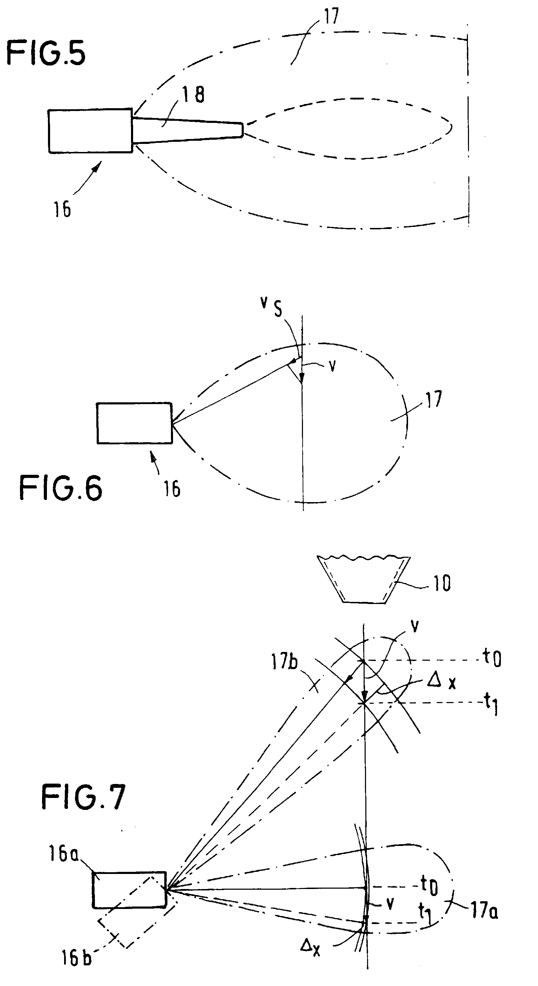

Ein derartiger Mikrowellensensor 16 und sein Erfassungsbereich 17 sind in Fig. 5 schematisch dargestellt. Der Mikrowellensensor 16 hat einen Hochfrequenzoszillator, der elektromagnetische Schwingungen im Bereich von 10 GHz erzeugt und abstrahlt. Versuche haben gezeigt, daß eine abgestrahlte Leistung von 1 mW für die Messung ausreichend ist. Eine Gesundheitsgefährdung für Bedienpersonal kann von diesem Sensor nicht ausgehen, da bereits übliche Mikrowellenherde bis zu 5 mW pro $cm^2$ abstrahlen. Üblicherweise hat ein Mikrowellensensor 16 einen großen Erfassungsbereich 17, wie er mit strichpunktierten Linien angedeutet ist. Dieser Erfassungsbereich kann eine Reichweite von etwa 10 m haben und hat weiterhin einen großen Öffnungswinkel. Bei dem Einsatz eines derartigen Sensors ergeben sich Probleme, da sowohl die Fallbewegungen von Beton aus benachbarten Auslaßöffnungen 11 als auch eventuell vorbeilaufende Personen von dem Sensor erfaßt werden.

Zum Dämpfen und Fokussieren der Mikrowellen ist ein kegelstumpfförmiger Stab 18 aus Plexiglas auf die Sensoröffnung aufgesetzt. In dem Stab 18 werden die Mikrowellen derart geführt, daß sie fokussiert und gedämpft aus dem Stab 18 austreten; der Erfassungsbereich 17 ist für diesen Mikrowellensensor 16 gestrichelt dargestellt. Der Öffnungswinkel des Erfassungsbereichs beträgt 10° und die Reichweite ist bis auf maximal wenige Meter reduziert. Zur Fokussierung könnte man anstelle eines Stabs 18 aus Kunststoff auch einen Trichter aus Metall verwenden. Dieser Metalltrichter hätte allerdings kaum Dämpfungseigenschaften, wodurch auch Bewegungen hinter der Fallstrecke des Betons erfaßt würden.

In Fig. 6 ist zur Verdeutlichung des Dopplereffekts ein Mikrowellensensor 16 mit nicht fokussiertem Erfassungsbereich 17 schematisch dargestellt. Als zu erfassendes Objekt wird ein senkrecht fallendes Teilchen von Beton angenommen, zu dessen Fallinie der Mikrowellensensor 16 senkrecht angeordnet ist. Der Mikrowellensensor 16 arbeitet mit dem Dopplereffekt, d.h. er registriert die Frequenzverschiebung des von dem fallenden Betonteilchen reflektierten Signals. Die Frequenzverschiebung wird dadurch hervorgerufen, daß das Betonteilchen eine Geschwindigkeitskomponente in Richtung des Sensors hat oder mit anderen Worten, dadurch, dar sich die Entfernung zwischen Betonteilchen und Sensor ändert.

Das Betonteilchen fällt mit der Geschwindigkeit v senkrecht nach unten. Diese Geschwindigkeit v kann in Bezug auf den Mikrowellensensor 16 vektoriell zerlegt werden, nämlich in eine Komponente $v_S$, die in Richtung des Mikrowellensensors 16 verläuft und eine zu dem Geschwindigkeitsanteil $v_S$ senkrecht gerichtete Komponente. Das Maß der Frequenzverschiebung wird durch den Betrag der auf den Mikrowellensensor 16 gerichteten Geschwindigkeitskomponente $v_S$ bestimmt. Je größer der Betrag der Geschwindigkeitskomponente $v_S$ ist, desto größer ist die Frequenzverschiebung.

In Fig. 7 sind zwei mögliche Anordnungen eines Mikrowellensensors 16 gezeigt. Der Mikrowellensensor 16a ist derart ausgerichtet, daß sich sein Erfassungsbereich 17a senkrecht zu der Fallinie des Betons erstreckt. Ein Betonteilchen fällt mit der Geschwindigkeit v senkrecht nach unten. Betrachtet wird hier der Fall während einer Zeitspanne $t = t_1 - t_0$. Zum Zeitpunkt $t_0$ befindet sich das Betonteilchen am Startpunkt des Geschwindigkeitsvektors v und zum Zeitpunkt $t_1$ am Ende des Geschwindigkeitsvektors v. Die Frequenzverschiebung der von dem fallenden Betonteilchen reflektierten Mikrowellenstrahlung ist abhängig von der Entfernungsänderung des Betonteilchens bezüglich des Mikrowellensensors 16a innerhalb einer Zeitspanne t. Zur Verdeutlichung dieser Entfernungsänderung sind zwei Kreisabschnitte eingezeichnet, deren Mittelpunkt die Öffnung des Mikrowellensensors 16a ist und von denen der eine durch den Startpunkt des Betonteilchens und der andere durch den Endpunkt des Betonteilchens verläuft. Der in radialer Richtung aufgetragene Abstand $\Delta x$ zwischen diesen beiden Kreisen ist ein Maß für die Entfernungsänderung des Betonteilchens bezüglich des Mikrowellensensors 16a und damit auch ein Maß für die Frequenzänderung des reflektierten Signals.

Der Mikrowellensensor 16b ist derart geneigt angeordnet, daß sein Erfassungsbereich 17b zu dem Betonverteiler 10 hin ausgerichtet ist. Auch hier ist innerhalb des Erfassungsbereiches 17b ein senkrecht fallendes Betonteil vorhanden, das mit derselben Fallgeschwindigkeit v fällt. Zur Verdeutlichung der Entfernungsänderung $\Delta x$ sind zwei Kreisabschnitte mit dem Mittelpunkt der Sensoröffnung eingezeichnet. Die Kreisabschnitte verlaufen durch den Startpunkt des Geschwindigkeitsvektors (zum Zeitpunkt $t_0$) bzw. durch den Endpunkt des Geschwindigkeitsvektors (zum Zeitpunkt $t_1$). Im gleichen Zeitraum ist die Entfernungsänderung $\Delta x$ des Betonteils bezüglich des Mikrowellensensors 16 bei dem schräggestellten Mikrowellensensor 16b wesentlich größer, wodurch die Frequenzabweichung zwischen dem von dem Mikrowellensensor 16b ausgesandten Signal und dem von dem Betonteilchen reflektierten Signal vergrößert wird. Damit ist die Meßauflösung des Mikrowellensensors 16b größer als die des Mikrowellensensors 16a.

Bei der Herstellung von Betonfertigteilen mit dem Betonverteiler 10 werden die Auslaßöffnungen 11 zu unterschiedlichen Zeitpunkten mit den Schiebern 12 geöffnet bzw. verschlossen. Die Mikrowellensensoren 16 überwachen jeweils eine Auslaßöffnung 11, um festzustellen, ob bei geöffnetem Schieber 12 tatsächlich Beton 14 aus der Auslaßöffnung 11 austritt. Falls Beton aus dem Betonverteiler 10 austritt, gibt der Mikrowellensensor 16 ein Erkennungssignal an eine Auswerteinrichtung aus, das besagt, daß der Betonaustrag erfolgt. Falls kein Beton 14 austritt, gibt der Mikrowellensensor 16 ein Erkennungssignal aus, das besagt, daß kein Beton 14 austritt. Die Auswerteinrichtung veranlaßt dann Gegenmaßnahmen um die von dem Beton 14 verschlossene Auslaßöffnung 11 wieder zu öffnen, wie beispielsweise durch mehrmaliges öffnen und Schließen des Schiebers 12 der betreffenden Auslaßöffnung 11, oder auch durch Betätigung aller Schieber 12. Es kann auch eine Rüttelvorrichtung an dem Betonverteiler vorgesehen sein oder ähnlich Maßnahmen, die ein Aufbrechen von Betonverfestigungen ermöglichen.

Beton hat ein schwallartiges Austrittsverhalten, da die Viskosität des Betons von der Fließgeschwindigkeit abhängig ist. Daher kann es zu kurzzeitigen Unterbrechungen des Betonaustritts kommen, nach denen der Beton jedoch ohne weitere Hilfsmaßnahmen wieder zu fließen anfängt. Daher ist die Auswerteinrichtung derart aufgebaut, daß kurzzeitige Unterbrechungen des Betonaustritts und damit auch des Erkennungssignals des Mikrowellensensors 16 nicht zum Ergreifen von Gegenmaßnahmen führt. Bei schwallartigem Fließen des Betons sind Unterbrechungen von beispielsweise bis zu einer Sekunde tolerierbar. Die Abtastrate des Mikrowellensensors 16 wird zum Beispiel auf eine zehntel oder eine halbe Sekunde festgesetzt, so daß innerhalb eines Zeitraums von einer Sekunde mehrere Messungen durchgeführt werden können. Die Auswerteinrichtung veranlaßt erst dann Gegenmaßnahmen, wenn entsprechend viele Erkennungssignale des Mikrowellensensors 16 vorliegen, die besagen, daß kein Beton 14 austritt. Einzelne derartige Erkennungssignale werden hingegen toleriert. Für den Aufbau der Auswerteinrichtung eignen sich besonders unscharfe Logiken, wie z.B. die Fuzzy-Logik.

Das obige Ausführungsbeispiel wurde in Zusammenhang mit einem Betonverteiler beschrieben. Die Erfindung ist jedoch nicht nur auf das Gut Beton beschränkt. Sie kann auch bei anderen fließ- und schüttfähigen Gütern, wie z.B. Lack oder Kleber verwendet werden. Besonders vorteilhaft ist die Erfindung bei Flüssigkeiten oder Gütern einsetzbar, die dazu neigen, die Meßeinrichtung zuzusetzen, zu verstauben oder zu verkleben.

**Patentansprüche**

1. Auslaß-Meßeinrichtung für aus einem Silo (10) austretendes schütt oder fließfähiges Gut (14) mit einem Mikrowellensensor (16), der elektromagnetische Signale auf das aus dem Silo (10) austretende Gut (14) sendet und von den Gut (14) reflektierte Signale empfängt,

**dadurch gekennzeichnet,**

daß der Mikrowellensensor (16) derart ausgerichtet ist, daß sich in seinem Erfassungsbereich (17) der Abstand des fallenden Gutes (14) zu dem Mikrowellensensor (16) verändert, wodurch die Frequenz des reflektierten Signals unterschiedlich zu derjenigen des ausgesandten Signals ist, und daß der Mikrowellensensor (16) anhand des Frequenzunterschiedes ein den Gutaustritt angebendes Erkennungssignal erzeugt.

2. Auslaß-Meßeinrichtung nach Anspruch 1, dadurch gekennzeichnet, daß der Mikrowellensensor (16) einen kegelstumpfförmigen Stab (18) aus Kunststoff oder einen Trichter aus Metall zum Dämpfen und Fokussieren des in Richtung des Gutes (14) ausgesandten Signals aufweist.

3. Auslaß-Meßeinrichtung nach Anspruch 1 oder 2, dadurch gekennzeichnet, daß der Mikrowellensensor (16) zur Erhöhung der Meßempfindlichkeit derart geneigt ausgerichtet ist, daß der Erfassungsbereich (17) in Richtung der Auslaßöffnung (11) des Silos (10) zeigt.

4. Auslaß-Meßeinrichtung nach einem der Ansprüche 1-3, dadurch gekennzeichnet, daß der Mikrowellensensor (16) hinter einer Schutzabdeckung aus elektrisch nicht leitendem Material angeordnet ist.

5. Auslaß-Meßeinrichtung nach einem der Ansprüche 1-4, dadurch gekennzeichnet, daß das Gut (14) Beton ist.

6. Auslaß-Meßeinrichtung nach Anspruch 5, dadurch gekennzeichnet, daß das Silo (10) ein Betonverteiler mit mehreren Auslaßöffnungen (11) ist, denen jeweils ein Mikrowellensensor (16) zugeordnet ist, wobei die Erfassungsbereiche (17) der Mikrowellensensoren (16) jeweils nur den Bereich einer Auslaßöffnung (11) abdecken.

7. Auslaß-Meßeinrichtung nach einem der Ansprüche 1 bis 6, dadurch gekennzeichnet, daß eine Auswerteinrichtung für das Erkennungssignal mit dem Mikrowellensensor (16) verbunden ist, die in Abhängigkeit des Erkennungssignals ein Austrittssignal ausgibt, wobei kurzzeitige durch schwallartiges Austreten des Gutes (14) hervorgerufene Unterbrechungen des Erkennungssignals das Austrittssignal nicht verändern.

FIG.1

FIG.2

FIG.3

FIG.4

7

FIG.5

17

18

16

FIG.6

v S

v

17

16

10

v

17b

t0

Δx

t1

FIG.7

16a

t0

v

t1

17a

16b

Δx

Europäisches Patentamt

## EUROPÄISCHER RECHERCHENBERICHT

Nummer der Anmeldung

EP 98 12 3559

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 4 091 385 A (PETLEVICH WALTER J ET AL) 23. Mai 1978 | 1,3,4,7 | G01F1/66 G01P13/00 |
| Y | * Spalte 3, Zeile 4 – Spalte 4, Zeile 32; Abbildung 1 * | 2 | |
| Y | GAUTHIER F: "LES DEBITMETRES DOPPLER GAGNENT EN PRECISION" Juni 1997 , MESURES REGULATION AUTOMATISME, NR. 696, PAGE(S) 9/10 XP000725897 * Abbildung 1 * | 2 | |
| A | FR 2 581 344 A (ROYER FERNAND) 7. November 1986 * Seite 2, Zeile 22 – Zeile 36; Abbildung 1 * | 5,6 | |

RECHERCHIERTE SACHGEBIETE (Int.Cl.6)

G01F
G01P
B28B

Der vorliegende Recherchenbericht wurde für alle Patentansprüche erstellt

| Recherchenort | Abschlußdatum der Recherche | Prüfer |
|---|---|---|
| DEN HAAG | 23. März 1999 | Boerrigter, H |

EPO FORM 1503 03.82 (P04C03)

**EP 0 922 938 A1**

## ANHANG ZUM EUROPÄISCHEN RECHERCHENBERICHT
## ÜBER DIE EUROPÄISCHE PATENTANMELDUNG NR.

EP 98 12 3559

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-1999

| Im Recherchenbericht angeführtes Patentdokument | Datum der Veröffentlichung | Mitglied(er) der Patentfamilie | Datum der Veröffentlichung |
|---|---|---|---|
| US 4091385 A | 23-05-1978 | KEINE | |
| FR 2581344 A | 07-11-1986 | KEINE | |

Für nähere Einzelheiten zu diesem Anhang : siehe Amtsblatt des Europäischen Patentamts, Nr.12/82